(19) Europäisches Patentamt
European Patent Office
Office européen des brevets

(11) **EP 2 236 197 B1**

(12) **EUROPEAN PATENT SPECIFICATION**

(45) Date of publication and mention
of the grant of the patent:
**08.03.2017 Bulletin 2017/10**

(51) Int Cl.:
***B01D 71/02*** *(2006.01)*   ***C04B 35/111*** *(2006.01)*

(21) Application number: **10250596.3**

(22) Date of filing: **26.03.2010**

(54) **Alumina porous body and method of producing the same**

Poröser Tonerdkörper und Herstellungsverfahren dafür

Corps poreux en alumine et son procédé de production

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.03.2009 JP 2009076443**

(43) Date of publication of application:
**06.10.2010 Bulletin 2010/40**

(73) Proprietor: **NGK Insulators, Ltd.**
**Nagoya-city, Aichi 467-8530 (JP)**

(72) Inventors:
• **Tomita, Takahiro**
**Nagoya City**
**Aichi-ken, 467-8530 (JP)**
• **Jindo, Asumi**
**Nagoya City**
**Aichi-ken, 467-8530 (JP)**
• **Morimoto, Kenji**
**Nagoya City**
**Aichi-ken, 467-8530 (JP)**
• **Kuwamoto, Ken**
**Nagoya City**
**Aichi-ken, 467-8530 (JP)**
• **Inoue, Katsuhiro**
**Nagoya City**
**Aichi-ken, 467-8530 (JP)**

(74) Representative: **Naylor, Matthew John et al**
**Mewburn Ellis LLP**
**City Tower**
**40 Basinghall Street**
**London EC2V 5DE (GB)**

(56) References cited:
**WO-A1-2009/108299     JP-A- H01 308 868**
**US-A- 5 415 775      US-A1- 20040 253 432**
**US-B2- 7 446 067**

**Description**

BACKGROUND OF THE INVENTION

The present invention relates to an alumina porous body that exhibits excellent acid resistance and alkali resistance, and may suitably be used as a substrate (support) of a filter used for water treatment or the like.

A filter formed of a ceramic porous body (ceramic filter) has widely been used as a solid-liquid separation filter or a gas-solid separation filter that removes a solid (suspended substance) contained in a fluid (e.g., liquid or gas). A ceramic filter normally includes a substrate (support) that is formed of a porous body having a microstructure in which a glassy bonding phase binds a particle as an aggregate formed of ceramic particles (e.g., alumina), and at least one filter membrane (porous membrane) that has an average pore size smaller than that of the substrate and is formed on the surface of the substrate.

A ceramic filter has a problem in which substances suspended in the treatment target fluid clog the pores formed in the filter with the passage of time (i.e., permeability decreases) so that it is necessary to remove the substances that clog the pores by chemical washing or back washing in a constant cycle.

The term "chemical washing" refers to a washing operation using a chemical appropriate for dissolving the suspended substances (e.g., alkaline solution (e.g., sodium hydroxide aqueous solution) or acidic solution (e.g., citric acid aqueous solution). A chemical washing operation is normally performed to dissolve and remove suspended substances accumulated over a long time. The term "back washing" refers to a washing operation that causes a fluid to flow from the fluid permeation side to the treatment target fluid supply side of the filter under pressure to remove suspended substances that clog the pores and discharge the substances to the outside. The back washing operation is normally performed every several minutes or hours between filtration operations in order to remove suspended substances accumulated within a short time.

A ceramic filter may be corroded by repeated chemical washing and back washing operations so that the strength of the ceramic filter may decrease. Specifically, a glass phase (bonding phase) of the substrate is chemically corroded due to an alkaline solution and an acidic solution used for chemical washing so that the strength of particles as an aggregate decreases. The ceramic filter is then back-washed at a pressure higher than that employed during a normal filtration process so that physical corrosion occurs. As a result, the strength of the entire substrate (filter) decreases.

Japanese Patent No. 4136365 discloses a filter using a ceramic porous body that is formed to maintain a necessary strength to some extent by increasing the initial strength. However, a ceramic filter is expected to be used in a more severe environment (e.g., the drug and food industries) and subjected to more severe washing conditions (i.e., more frequently subjected to chemical washing and back washing). Therefore, a further improvement in corrosion resistance against an alkaline solution and an acidic solution has been desired.

Japanese Patent No. 2670967 discloses an inorganic membrane porous monolithic ceramic support in which the bonding phase is formed of titania that has a corrosion resistance higher than that of a glass phase. However, the inventors of the present invention confirmed that the support disclosed in Japanese Patent No. 2670967 has a problem in which a sufficient initial strength cannot be achieved due to poor sinterability of titania.

US 7,446,067 describes a ceramic green sheet which contains an inorganic powder and an organic resin and is characterized in that the inorganic powder contains 72 to 98% by weight of aluminum oxide, 1 to 12% by weight of copper oxide, 0.1 to 3% by weight of titanium oxide, and 0.25 to 10% by weight of silicon oxide based on 100% by weight of the total weight of the inorganic powder.

US 2004/0253432 describes a method for producing a porous ceramic layer and for application of this layer onto metallic, ceramic, enamelled and/or glass substrates using porous, ceramic particles, preferably aluminum oxide, titanium oxide and zircon oxide, and an inorganic binder system. The inorganic binder system contains at least one ceramic nanoparticle of a particle size of less than 100 nm, preferably less than 50 nm and particularly preferred less than 25 nm, the solvent being water.

JP H01 308868 describes a ceramic of aluminum titanate which characteristically contains $\geq 0.1$wt.% calculated as MnO of Mn. Ceramic raw materials having a chemical composition consisting of 0.5-20wt.% calculated as $ZrO_2$ of zirconium, 0.5-25wt.% calculated as $Fe_2O_3$ of iron, 0.1-10wt.% calculated as MnO of manganese, 25-55wt.% calculated as $TiO_2$ of titanium and 35-65wt.% calculated as $Al_2O_3$ of aluminum and $\leq 50$ $\mu$m particle diameter are molded and sintered at 1300-1700°C.

WO 2009/108299 describes an aluminum titanate-based ceramic is provided having an anisotropic microstructure which includes the reaction products of a plurality of ceramic-forming precursors. The batch contains at least one precursor in fibrous form. Porous ceramic bodies and the method of manufacture are also described.

US 5,415,775 describes porous monolithic ceramic support substrates, which have a mean equivalent pore diameter Ds ranging from 1 to 20 $\mu$m and a pore volume greater than 30%, and comprise ceramic alumina particulates at least partially coated with $TiO_2$ particles, wherein the percentage by weight of $TiO_2$, with respect to the total weight of $Al_2O_3$ plus $TiO_2$, ranges from 1% to 75%.

SUMMARY OF THE INVENTION

The present invention was conceived in view of the above situation. An object of the present invention is to provide an alumina porous body that exhibits high initial strength and excellent corrosion resistance against an alkaline solution and an acidic solution, and rarely shows a decrease in strength even in a severe environment in which the alumina porous body is frequently exposed to such a solution, and a method of producing the same.

According to the present invention, the above object may be achieved by the following alumina porous body, method of producing an alumina porous body, and ceramic filter.

[1] An alumina porous body as set out in claim 1.

[2] The alumina porous body according to [1], the alumina porous body having a flexural strength of 10 to 150 MPa as measured by a flexural strength test JIS R 1601.

[3] The alumina porous body according to [1] or [2], the alumina porous body having a strength decrease rate of 20% or less, the strength decrease rate being calculated by the following expression (1) "strength decrease rate (%) = (initial strength - strength after operation) / initial strength $\times$ 100" (where, "strength after operation" is the flexural strength of the alumina porous body after repeating (three times) an operation of immersing the alumina porous body in a sulfuric acid aqueous solution (temperature: 100°C, pH: 2) for three hours, removing the sulfuric acid aqueous solution by washing, drying the alumina porous body, immersing the alumina porous body in a sodium hydroxide aqueous solution (temperature: 100°C, pH: 12) for three hours, removing the sodium hydroxide aqueous solution by washing, and drying the alumina porous body, and "initial strength" is the flexural strength of the alumina porous body before performing the operation).

[4] The alumina porous body according to any one of [1] to [3], the alumina porous body having an average coefficient of linear thermal expansion of 7.5 to $8.5 \times 10^{-6}$/K as measured in accordance with JIS R 1618.

[5] The alumina porous body according to any one of [1] to [4], the alumina porous body having a monolith shape.

[6] A solid-liquid separation filter having a substrate which is an alumina porous body according to any one of [1] to [5].

[7] A solid-liquid separation filter for water treatment, the filter having a substrate which is an alumina porous body according to any one of [1] to [5].

[8] A method of producing an alumina porous body according to [1], the method comprising: kneading a raw material mixture that contains alumina particles having an average particle diameter of 1 to 80 $\mu$m, titania particles having an average particle diameter of 0.5 to 10 $\mu$m, and copper oxide to obtain a kneaded clay, forming the kneaded clay into a given shape, and drying, calcining, and firing the resulting formed body at a firing temperature of 1200 to 1300°C to obtain an alumina porous body according to [1].

[9] A ceramic filter comprising the alumina porous body according to any one of [1] to [5], and at least one porous ceramic membrane that has an average pore size smaller than that of the alumina porous body and is formed on the surface of the alumina porous body.

The alumina porous body according to the present invention exhibits excellent corrosion resistance against an acidic solution or an alkaline solution since the bonding phase that binds particles as an aggregate is not a glass phase that exhibits low corrosion resistance against an acidic solution or an alkaline solution, but contains titanium oxide (titania) that exhibits excellent corrosion resistance as the main component. Therefore, the strength of the alumina porous body according to the present invention decreases to only a small extent even when exposed to a severe environment in which the alumina porous body is frequently exposed to such a solution. Since a given component that serves as a sintering aid is added during production, the sinterability of the alumina porous body is improved as compared with the case where such a component is not used so that the initial strength of the alumina porous body increases. Since the method according to the present invention utilizes a given metal compound that serves as a sintering aid together with the alumina particles (particle as an aggregate) and the titania particles (main component of bonding phase), an alumina porous body that exhibits high initial strength and excellent corrosion resistance can conveniently be produced by sintering the materials at a relatively low temperature. Since the ceramic filter according to the present invention utilizes the substrate (support) formed of the alumina porous body according to the present invention, the ceramic filter exhibits high initial strength and excellent corrosion resistance against an acidic solution or an alkaline solution, and maintains high strength for a long time. Therefore, the ceramic filter according to the present invention maintains high strength for a long time even when the ceramic filter is used to remove a solid in applications (e.g., the drug and food industries) in which the ceramic filter is subjected to severe washing conditions.

BRIEF DESCRIPTION OF THE DRAWINGS

FIG. 1 shows an SEM photograph of the microstructure of the alumina porous body of Example 20.
FIG. 2 is a perspective view showing a monolithic alumina porous body.

DESCRIPTION OF EXEMPLARY EMBODIMENTS

Embodiments of the present invention are described below. Note that the present invention is not limited to the following embodiments.

An alumina porous body according to the present invention has a porosity of 15 to 45% and an average pore size of 2 to 15 $\mu$m, and includes 5 to 30 mass% of titanium oxide and copper , the total content of oxides of copper being 1.5 mass% or less.

When a ceramic porous body of which the bonding phase that binds particles as an aggregate is a glass phase is exposed to an acidic solution or an alkaline solution, corrosion proceeds in the glass phase that exhibits low corrosion resistance against such a solution. Therefore, it is necessary to improve the corrosion resistance of the bonding phase in order to improve the corrosion resistance of the ceramic porous body.

The alumina porous body according to the present invention exhibits excellent corrosion resistance against an acidic solution or an alkaline solution since the bonding phase that binds particles as an aggregate is not a glass phase that exhibits low corrosion resistance against an acidic solution or an alkaline solution, but contains titanium oxide (titania) that exhibits excellent corrosion resistance as the main component.

The alumina porous body according to the present invention includes 5 to 30 mass% of titanium oxide. The content of titanium oxide is preferably 7 mass% or more, and more preferably 9 mass% or more. The content of titanium oxide is preferably 28 mass% or less, and more preferably 26 mass% or less. Titanium oxide serves as a bonding phase that binds particles as an aggregate (i.e., alumina). If the content of titanium oxide is less than 5 mass%, particles as an aggregate may not sufficiently be bound. Therefore, a sufficient strength may not be achieved when using the alumina porous body as a substrate of a ceramic filter or the like. If the content of titanium oxide is more than 30 mass%, a porosity that achieves a sufficient water permeation rate may not be achieved when using the alumina porous body as a substrate of a solid-liquid separation ceramic filter, for example. The content of titanium oxide used herein refers to a value measured by ceramic raw material chemical analysis (JIS M 8853).

The alumina porous body according to the present invention includes copper oxide. This element is contained in a metal compound added to a raw material as a sintering aid when producing the alumina porous body according to the present invention. This element improves the sinterability of titania so that particles as an aggregate are strongly bound to exhibit high strength, and enable sintering at a relatively low temperature. In particular, since copper oxide effectively improves the sinterability of titania, the alumina porous body according to the present invention includes copper contained in copper oxide.

Copper is present in the alumina porous body (sintered body) according to the present invention as a metal compound that is added to the raw material as a sintering aid during production, an oxide of copper produced by oxidation during firing, or a compound of copper and titanium. The total content of oxides of copper is 1.5 mass% or less, preferably 1.2 mass% or less, and more preferably 1.0 mass% or less. If the content exceeds 1.5 mass%, the ratio of titania in the bonding phase relatively decreases so that corrosion resistance against an alkaline solution and an acidic solution may deteriorate. The lower limit of the total content of oxides of copper is not particularly limited. However, the sintering aid may exhibit an insufficient effect if the total content of oxides of copper is too small. Therefore, the total content of oxides of copper is 0.001 mass% or more, and preferably 0.005 mass% or more. The total content of oxides of copper used herein refers to a value measured by ceramic raw material chemical analysis (JIS M 8853).

The alumina porous body according to the present invention has a porosity of 15 to 45%. The lower limit of the porosity of the alumina porous body is preferably 18% or more, and more preferably 20% or more. The upper limit of the porosity of the alumina porous body is preferably 40% or less. If the porosity of the alumina porous body is less than 15%, a sufficient water permeation rate may not be achieved when using the alumina porous body as a substrate of a solid-liquid separation ceramic filter, for example. If the porosity of the alumina porous body is more than 45%, a sufficient strength may not be obtained. The term "porosity" used herein refers to a value measured by the Archimedes method (JIS R 1634).

The alumina porous body according to the present invention has an average pore size of 2 to 15 $\mu$m. The lower limit of the average pore size of the alumina porous body is preferably 3 $\mu$m or more, and more preferably 5 $\mu$m or more. If the average pore size of the alumina porous body is less than 2 $\mu$m, a sufficient water permeation rate may not be achieved when using the alumina porous body as a substrate of a solid-liquid separation ceramic filter, for example. If the average pore size of the alumina porous body is more than 15 $\mu$m, a sufficient strength may not be obtained. The term "average pore size" used herein refers to a value measured by mercury porosimetry (JIS R 1655).

The alumina porous body according to the present invention preferably has a flexural strength of 10 to 150 MPa. The lower limit of the flexural strength of the alumina porous body is preferably 11 MPa or more, and more preferably 12 MPa or more. If the flexural strength of the alumina porous body is less than 10 MPa, the alumina porous body is not corroded by an alkaline solution and an acidic solution, but may break when used as a substrate of a ceramic filter, for example. It is difficult to produce an alumina porous body having a flexural strength of more than 150 MPa while achieving a porosity required for a substrate of a ceramic filter or the like. The term "flexural strength" used herein refers to a value measured by a flexural strength test JIS R 1601.

The alumina porous body according to the present invention preferably has a strength decrease rate of 20% or less, more preferably 19% or less, and still more preferably 18% or less, the strength decrease rate being calculated by the following expression (1) "strength decrease rate (%) = (initial strength - strength after operation) / initial strength $\times$ 100" (where, "strength after operation" is the flexural strength of the alumina porous body after repeating (three times) an operation of immersing the alumina porous body in a sulfuric acid aqueous solution (temperature: 100°C, pH: 2) for three hours, removing the sulfuric acid aqueous solution by washing, drying the alumina porous body, immersing the alumina porous body in a sodium hydroxide aqueous solution (temperature: 100°C, pH: 12) for three hours, removing the sodium hydroxide aqueous solution by washing, and drying the alumina porous body, and "initial strength" is the flexural strength of the alumina porous body before performing the operation).

If the strength decrease rate is 20% or less, the alumina porous body exhibits sufficient corrosion resistance even when used as a substrate of a solid-liquid separation ceramic filter that is alternately and repeatedly exposed to an alkaline solution and an acidic solution.

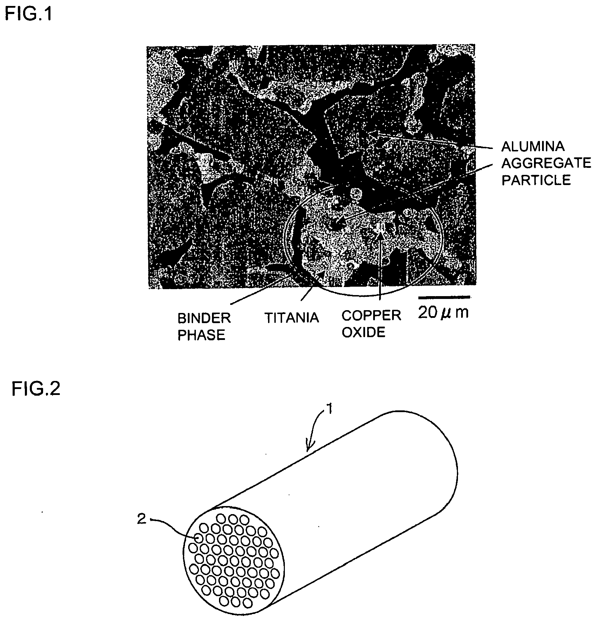

The alumina porous body according to the present invention has a microstructure in which a bonding phase that contains titania particles as the main component binds alumina particle as an aggregate having an average particle diameter of 2 to 80 $\mu$m. The bonding phase that contains titania particles as the main component refers to a bonding phase having a titania particle content of 50 mass% or more. The term "particle diameter" used herein refers to a value calculated by analyzing an SEM photograph of the microstructure of the alumina porous body. Specifically, only alumina particle as an aggregate is extracted from an SEM photograph shown in FIG. 1 to obtain an image in which individual alumina particle as an aggregate can be distinguished from other alumina particle as an aggregate. The area of each alumina particle as an aggregate in the resulting image is calculated. The diameter of each alumina particle as an particle as an aggregate is converted from the area of each alumina particle as an aggregate on the assumption that each alumina particle as an aggregate is circular, and taken as the particle diameter. The term "average particle diameter" used herein refers to a value calculated by calculating the particle diameter of n alumina particle as an aggregate, and dividing the sum of the particle diameters of the n alumina particle as an aggregate by n. The number (n) of alumina particle as an aggregate used for image analysis is 50 to 200.

If the alumina porous body has a microstructure in which the bonding phase that contains titania particles as the main component binds the alumina particle as an aggregate having an average particle diameter within the above range, the alumina porous body exhibits excellent corrosion resistance against an alkaline solution and an acidic solution, and has a porosity and an average pore size appropriate for a substrate of a ceramic filter or the like. The upper limit of the average particle diameter of the alumina particle as an aggregate is preferably 100 $\mu$m or less, and more preferably 95 $\mu$m or less.

The bonding phase described herein contains an oxide of at least one element selected from the group consisting of copper, manganese, calcium, and strontium, or a complex oxide that contains at least two elements selected from the group consisting of copper, manganese, calcium, strontium, aluminum, and titanium, in addition to the titania particles (main component). According to the invention the bonding phase contains copper oxide. The oxide or complex oxide phase may be scattered in the titania phase, may be present in layers at the interface between the alumina particle as an aggregate and the titania phase, may be present on the surface of the titania phase, or may be present in the form of particles at the interface between the alumina particle as an aggregate and the titania phase, for example. It is preferable that the oxide or complex oxide phase have a particle diameter equal to or less than the particle diameter of the alumina particle as an aggregate and the titania phase so that the oxide or complex oxide phase is uniformly dispersed in the texture. The average particle diameter of the oxide or complex oxide phase is preferably 5 $\mu$m or less.

The alumina porous body according to the present invention preferably has an average coefficient of linear thermal expansion of 7.5 to $8.5\times10^{-6}$/K. The lower limit of the average coefficient of linear thermal expansion of the alumina porous body is preferably $7.6\times10^{-6}$/K or more, and more preferably $7.7\times10^{-6}$/K or more. The upper limit of the average coefficient of linear thermal expansion of the alumina porous body is preferably $8.4\times10^{-6}$/K or less, and more preferably $8.3\times10^{-6}$/K or less. If the average coefficient of linear thermal expansion of the alumina porous body is less than $7.5\times10^{-6}$/K or more than $8.5\times10^{-6}$/K, when using the alumina porous body as a substrate of a ceramic filter, cracks may occur at the interface between the substrate and a porous ceramic membrane formed on the substrate or the interface between the substrate and a seal that seals the ends of the substrate and the porous ceramic membrane due to a difference in thermal expansion.

The shape of the alumina porous body according to the present invention is not particularly limited. The shape of the alumina porous body may appropriately be selected depending on the application. For example, when using the alumina porous body as a substrate of a solid-liquid separation filter, the alumina porous body preferably has a monolith shape widely employed for such a substrate.

The application of the alumina porous body according to the present invention is not particularly limited. Since the alumina porous body exhibits excellent corrosion resistance against an acidic solution or an alkaline solution, the alumina porous body is preferably used in applications that effectively utilize the properties of the alumina porous body (e.g., a substrate of a solid-liquid separation filter used for water treatment). A solid-liquid separation filter used in applications (e.g., the drug and food industries) in which the solid-liquid separation filter is subjected to severe washing conditions is frequently subjected to chemical washing and back washing. It is preferable to use the alumina porous body according to the present invention as a substrate of such a solid-liquid separation filter since the properties of the alumina porous body can effectively be utilized.

A method of producing an alumina porous body according to the present invention is described below. The method of producing an alumina porous body according to the present invention includes kneading a raw material mixture that contains alumina particles having an average particle diameter of 1 to 120 $\mu$m, titania particles having an average particle diameter of 0.5 to 10 $\mu$m, and copper oxide to obtain a kneaded clay, forming the kneaded clay into a given shape, and drying, calcining, and firing the resulting formed body to obtain an alumina porous body as described herein. The term "average particle diameter" used herein refers to a value (average particle diameter by volume) obtained by measuring the particle size distribution by a laser diffraction/scattering method based on JIS R 1629.

The alumina particles used as the raw material mainly serve as a particle as an aggregate of the alumina porous body, and have an average particle diameter of 1 to 80 $\mu$m. Alumina particles that differ in average particle diameter may be used in combination as the alumina particles. In this case, the mixed alumina particles have an average particle diameter of 1 to 80 $\mu$m. The upper limit of the average particle diameter of the alumina particles is 80 $\mu$m or less. The lower limit of the average particle diameter of the alumina particles is preferably 5 $\mu$m or more, and more preferably 10 $\mu$m or more. When using alumina particles that differ in average particle diameter in combination, it is preferable that at least one type of alumina particles have an average particle diameter of 1 to 100 $\mu$m. In this case, the upper limit of the average particle diameter is preferably 80 $\mu$m or less, and more preferably 60 $\mu$m or less, and the lower limit of the average particle diameter is preferably 5 $\mu$m or more, and more preferably 10 $\mu$m or more. If the average particle diameter of the alumina particles used as the raw material is less than 1 $\mu$m, the desired porosity and pore size may not be achieved. If the average particle diameter of the alumina particles is more than 120 $\mu$m, forming may become difficult.

The titania particles are used as the main component of the bonding phase that mainly binds particles as an aggregate (alumina particles), and have an average particle diameter of 0.5 to 10 $\mu$m. The upper limit of the average particle diameter of the titania particles is preferably 9.5 $\mu$m or less, and more preferably 9 $\mu$m or less. If the average particle diameter of the titania particles is less than 0.5 $\mu$m, the raw material cost may increase. If the average particle diameter of the titania particles is more than 10 $\mu$m, the desired strength may not be obtained.

Copper oxide is used in the raw material mixture together with the alumina particles and the titania particles and functions as a sintering aid. Such a metal compound improves the sinterability of titania so that particles as an aggregate are strongly bound to exhibit high strength, and also enables sintering at a relatively low temperature. When using copper oxide in the raw material mixture,
the strength of the alumina porous body may be doubled.

An organic binder, a dispersant, a surfactant, water, and the like may also be added to the raw material mixture in addition to the alumina particles, the titania particles, and the copper oxide (sintering aid).

Examples of the organic binder include methyl cellulose, hydroxypropoxyl cellulose, hydroxyethyl cellulose, carboxymethyl cellulose, polyvinyl alcohol, and the like.

Examples of the dispersant and the surfactant include a fatty acid salt, an alkyl sulfate salt, a polyoxyethylene alkyl ether sulfate salt, an alkylbenzene sulfonate, an alkylnaphthalene sulfonate, an alkyl sulfosuccinate, an alkyl diphenyl ether disulfonate, an alkyl phosphate, a polycarboxylate, a polyacrylate, an aliphatic quaternary ammonium salt, an aliphatic amine salt, a polyoxyethylene alkyl ether, a polyoxyethylene alcohol ether, a polyoxyethylene glycerol fatty acid ester, a polyoxyethylene sorbitan (or sorbitol) fatty acid ester, a polyethylene glycol fatty acid ester, an alkyl betaine, an amine oxide, a cationic cellulose derivative, and the like.

The raw material mixture is kneaded to obtain a plastic kneaded clay. The kneaded clay is formed into a given shape to obtain a formed body. The kneaded clay is preferably prepared by mixing the titania particles, copper oxide, the dispersant, and water to obtain a slurry, adding the alumina particles, the organic binder, the surfactant, and a proper quantity of water, and kneading the mixture, for example.

The shape of the formed body is not particularly limited. The shape of the formed body may appropriately be selected depending on the application. For example, when using the alumina porous body as a substrate of a solid-liquid separation filter, the shape of the formed body is preferably a monolith shape. The kneaded clay is preferably formed into a monolith shape by extrusion or the like.

The formed body is then appropriately dried and fired to obtain an alumina porous body according to the present invention. The drying method is not particularly limited. For example, the formed body is preferably dried using microwaves, hot blast, or the like. The formed body may appropriately be calcined to remove the organic substances (e.g., organic binder and the like) contained in the formed body before firing the dried formed body. Since the combustion temperature of an organic binder is normally about 100 to 300°C, the calcining temperature may be set at about 200 to 600°C. The calcining time is normally about 1 to 10 hours. Note that the calcining time is not limited thereto. The formed body may be calcined in the air, a nitrogen atmosphere, or the like.

The firing temperature is 1200 to 1300°C, more preferably 1215 to 1300°C, and still more preferably 1230 to 1300°C. If the firing temperature is higher than 1300°C, a complex oxide (e.g., $Al_2TiO_5$) is likely to be produced due to the reaction of alumina and titania. As a result, microcracks may occur due to the difference in coefficient of thermal expansion between $Al_2TiO_5$ and alumina or titania, and may cause a decrease in strength of the alumina porous body. If the firing temperature is 1200 to 1300°C, production of $Al_2TiO_5$ is suppressed. However, titania may not sufficiently be sintered if the sintering aid is not added. If the firing temperature is lower than 1200°C, titania may not sufficiently be sintered irrespective of the addition of the sintering aid. The firing time is normally about 0.5 to 10 hours. Note that the firing time is not limited thereto. The formed body may be fired in the air, a nitrogen atmosphere, or the like.

A ceramic filter according to the present invention is described below. The ceramic filter according to the present invention includes the alumina porous body according to the present invention, and at least one porous ceramic membrane that has an average pore size smaller than that of the alumina porous body and is formed on the surface of the alumina porous body.

Since the ceramic filter according to the present invention includes the substrate (support) formed of the alumina porous body according to the present invention that exhibits high initial strength and excellent corrosion resistance against an acidic solution or an alkaline solution, the ceramic filter exhibits excellent corrosion resistance against an acidic solution or an alkaline solution, and maintains high strength for a long time. Therefore, the ceramic filter according to the present invention maintains high strength for a long time even when the ceramic filter is used to remove a solid in applications (e.g., the drug and food industries) in which the ceramic filter is subjected to severe washing conditions.

The ceramic filter according to the present invention preferably includes the alumina porous body according to the present invention as a substrate, and a filter membrane that has an average pore size smaller than that of the substrate and is formed on the surface of the substrate. The filter membrane is a porous ceramic membrane that achieves the filtration function of the ceramic filter. An intermediate membrane that has an average pore size smaller than that of the substrate and larger than that of the filter membrane may be formed between the substrate and the filter membrane. The ends of the substrate and the membrane are preferably sealed by a seal that is formed to surround the ends of the substrate and the membrane. The seal prevents a situation in which a treatment target fluid does not pass through the filter membrane, but directly enters the substrate or the intermediate membrane from the end face of the substrate or the intermediate membrane.

The ceramic filter according to the present invention is produced as follows, for example. About 70 mass% of ceramic particles (containing alumina particles and titania particles as the main component) and water are mixed using a pot mill or the like optionally together with a dispersant, an organic binder, and a surfactant. The ceramic particles are processed to have an average particle diameter of 0.1 to 3 $\mu$m to prepare a ceramic membrane slurry. An alumina porous body 1 having a monolith shape shown in FIG 2 is provided with an O-ring on each end of the outer circumferential surface so that the outer circumferential surface is isolated from the inside of cells 2, and secured in a flange.

The pressure around the alumina porous body (outer circumferential surface) is reduced using a vacuum pump (i.e., a pressure difference occurs) while continuously supplying the ceramic membrane slurry to the cells using a supply pump so that the filter membrane slurry that flows inside the cells is sucked from the outer circumferential surface side to adhere to the inner side of the cells to form a ceramic membrane. The alumina porous body on which the ceramic membrane is formed is dried, and fired at about 950 to 1250°C to obtain a ceramic filter in which the porous ceramic membrane is formed on the inner surface of the cells of the substrate formed of the alumina porous body.

When forming a plurality of porous ceramic membranes in layers, the membrane formation/drying/firing process is repeated. In this case, a ceramic filter that is configured so that the average pore size gradually decreases from the substrate to the outermost porous ceramic membrane (filter membrane), is obtained by gradually reducing the average particle diameter of the ceramic particles contained in the ceramic membrane slurry each time the process is repeated.

When forming a plurality of porous ceramic membranes in layers, the ends of the substrate and the membranes are preferably sealed by a seal that is formed to surround the ends of the substrate and the membranes to prevent a situation in which a treatment target fluid does not pass through the filter membrane, but directly enters the substrate or the intermediate membrane from the end face of the substrate or the intermediate membrane. For example, a sealant may be applied to the end of the substrate and an area around the end of the substrate, and dried or heated to form a seal that allows the treatment target fluid to pass through to only a small extent. The sealant may appropriately contain a glassy material, a thermoplastic polymer, a thermosetting polymer, or the like.

EXAMPLES

The present invention is further described below by way of examples. Note that the present invention is not limited to the following examples.

Examples 1 to 34 (Examples 24 to 27 being reference examples) and Comparative Example

As shown in Tables 1 and 2, titanium oxide ($TiO_2$) particles having an average particle diameter of 0.8 $\mu$m or 5 $\mu$m, at least one compound (sintering aid) selected from copper oxide (CuO), manganese oxide ($Mn_3O_4$), calcium carbonate ($CaCO_3$), and strontium carbonate ($SrCO_3$), a dispersant, and water were mixed using a pot mill to prepare a slurry (batch No. 1 to No. 17). As shown in Table 2, titanium oxide ($TiO_2$) particles having an average particle diameter of 0.8 $\mu$m, a dispersant, and water were mixed using a pot mill to prepare a slurry (batch No. 18) that did not contain the sintering aid.

As shown in Tables 3 to 6, alumina ($Al_2O_3$) particles having a given average particle diameter, one of the above slurries, an organic binder, a surfactant, and water were mixed to obtain a plastic kneaded clay. The kneaded clay was extruded into a rectangular sheet (about 25×50×5 mm), and dried to obtain a formed body. The formed body was calcined at 450°C, and fired at a firing temperature shown in Tables 3 to 6 for two hours to obtain alumina porous bodies of Examples 1 to 34 and a Comparative Example.

The porosity, the average pore size, the flexural strength, the strength decrease rate, the average coefficient of linear thermal expansion, and the like of the resulting alumina porous body were measured by the following methods. The results are shown in Tables 3 to 6. FIG 1 shows a photograph of the microstructure of the alumina porous body of Example 20.

[Porosity]

A measurement specimen (about 25×10×5mm) was cut from the alumina porous body, and the porosity of the measurement specimen was measured by the Archimedes method (JIS R 1634).

[Average pore size]

A measurement specimen (about 8×10×5mm) was cut from the alumina porous body, and the average pore size of the measurement specimen was measured by mercury porosimetry (JIS R 1655).

[Flexural strength]

The flexural strength was measured in accordance with JIS R 1601.

[Strength decrease rate]

An acid solution (sulfuric acid aqueous solution (pH: 2)) and the alumina porous body were placed in a pressure vessel (the inner wall was made of polytetrafluoroethylene, Teflon(trade name of Du Pont Inc.)) so that the entire alumina porous body was immersed in the acid solution. After air-tightly sealing the pressure vessel, the alumina porous body was allowed to stand at 100°C for three hours. After removing the alumina porous body, the acid solution was removed by washing, and the alumina porous body was sufficiently dried. An alkali solution (sodium hydroxide aqueous solution (pH: 12)) and the alumina porous body were placed in a pressure vessel (the inner wall was made of polytetrafluoroethylene) so that the entire alumina porous body was immersed in the alkali solution. After air-tightly sealing the pressure vessel, the alumina porous body was allowed to stand at 100°C for three hours. After removing the alumina porous body, the alkali solution was removed by washing, and the alumina porous body was sufficiently dried. After repeating the above operation three times, the flexural strength (strength after operation) of the alumina porous body was measured by the above method, and the strength decrease rate was calculated by the following expression (1) from the measured flexural strength and the flexural strength (initial strength) before the operation.

$$\text{Strength decrease rate (\%)} = (\text{initial strength - strength after operation}) / \text{initial strength} \times 100 \quad (1)$$

[Average coefficient of linear thermal expansion]

A measurement specimen (2×2×20mm) was cut from the alumina porous body, and the average coefficient of linear thermal expansion of the measurement specimen was measured in accordance with JIS R 1618.

[Average particle diameter of $Al_2O_3$ particles as aggregates]

The average particle diameter of the $Al_2O_3$ particles as aggregates was calculated by analyzing an SEM photograph of the microstructure of the alumina porous body. Specifically, only alumina particles as aggregates were extracted from the SEM photograph shown in FIG 1 to obtain an image in which individual alumina particle as an aggregate can be distinguished from other alumina particles as aggregates. The area of each alumina particle as an aggregate in the resulting image was calculated. The diameter of each alumina particle as an aggregate was converted from the area of each alumina particle as an aggregate on the assumption that each alumina particle as an aggregate is circular, and taken as the particle diameter. The particle diameters of n alumina particles as aggregates were calculated, and the sum of the particle diameters of the n alumina particles as aggregates was divided by n to obtain the average particle diameter of the $Al_2O_3$ particles as aggregates. The number (n) of alumina particles as aggregates used for image analysis was about 50 to 200.

[$TiO_2$ content in alumina porous body]

The $TiO_2$ content in the alumina porous body was measured by ceramic raw material chemical analysis (JIS M 8853).

[Total content of Cu, Mn, Ca, and Sr oxides in alumina porous body]

The Total content of Cu, Mn, Ca, and Sr oxides in the alumina porous body was measured by ceramic raw material chemical analysis (JIS M 8853).

TABLE 1

| Batch No. | 1 | 2 | 3 | 4 | 5 | 6 | 7 | 8 | 9 |
|---|---|---|---|---|---|---|---|---|---|
| $TiO_2$ (average particle diameter: 0.8 $\mu$m) (parts by mass) | 100 | 100 | 100 | 100 | - | 100 | 100 | 100 | 100 |
| $TiO_2$ (average particle diameter: 5 $\mu$m) (parts bv mass) | - | - | - | - | 100 | - | - | - | - |
| (parts by mass) | 1 | 1 | 1 | 1 | 1 | 1 | 1 | 2 | 1 |
| $Mn_3O_4$ (parts by mass) | - | - | - | - | - | - | - | - | - |
| $CaCO_3$ (parts by mass) | - | - | - | - | - | - | - | - | - |
| $SrCO_3$ (parts by mass) | - | - | - | - | - | - | - | - | - |
| Dispersant (parts by mass) | 0.1 | 0.1 | 0.5 | 0.5 | 0.1 | 0.1 | 0.5 | 0.5 | 0.5 |
| Water (parts by mass) | 100 | 151.5 | 66.8 | 53.8 | 100 | 151.5 | 66.8 | 66.8 | 66.8 |

TABLE 2

| Batch No. | 10 | 11 | 12 | 13 | 14 | 15 | 16 | 17 | 18 |
|---|---|---|---|---|---|---|---|---|---|
| $TiO_2$ (average particle diameter: 0.8 $\mu$m) (parts by mass) | 100 | 100 | 100 | 100 | 100 | 100 | - | 100 | 100 |
| $TiO_2$ (average particle diameter: 5 $\mu$m) parts by mass) | - | - | - | - | - | - | 100 | - | - |
| CuO (parts by mass) | 0.1 | - | - | - | - | 1 | 1 | 1 | - |
| $Mn_3O_4$ (parts by mass) | - | 0.95 | - | - | - | - | - | - | - |
| $CaCO_3$ (parts by mass) | - | - | 3.73 | 14.90 | - | - | - | - | - |
| $SrCO_3$ (parts by mass) | - | - | - | - | 5.55 | - | - | - | - |
| Dispersant (parts by mass) | 0.5 | 0.5 | 0.5 | 0.5 | 0.5 | 0.5 | 0.5 | 0.5 | 0.1 |
| Water (parts by mass) | 66.8 | 66.8 | 66.8 | 66.8 | 66.8 | 66.8 | 66.8 | 53.8 | 100 |

TABLE 3

| | Example 1 | Example 2 | Example 3 | Example 4 | Example 5 | Example 6 | Example 7 | Example 8 | Example 9 |
|---|---|---|---|---|---|---|---|---|---|
| $Al_2O_3$ (average particle diameter: 16 μm) (parts by mass) | 75.2 | 75.2 | 68.5 | 61.6 | 75.2 | - | - | - | - |
| $Al_2O_3$ (average particle diameter: 101 μm) (parts by mass) | 15.0 | 15.0 | 13.7 | 12.3 | 15.0 | - | - | - | - |
| $Al_2O_3$ (average particle diameter: 46 μm) (parts by mass) | - | - | - | - | - | 90.2 | 90.2 | 87.6 | 85.3 |
| $Al_2O_3$ (average particle diameter: 53 μm) (parts by mass) | - | - | - | - | - | - | - | - | - |
| $Al_2O_3$ (average particle diameter: 5 μm) (parts bv mass) | - | - | - | - | - | - | - | - | - |
| $Al_2O_3$ (average particle diameter: 10 μm) (parts by mass) | - | - | - | - | - | - | - | - | - |
| Average particle diameter (μm) of $Al_2O_3$ measured by laser scattering | 22.8 | 22.8 | 22.8 | 22.8 | 22.8 | 51.5 | 51.5 | 51.5 | 51.5 |
| Organic binder (parts by mass) | 4.68 | 4.68 | 4.68 | 4.68 | 4.68 | 4.68 | 4.68 | 4.68 | 4.68 |
| Surfactant (parts by mass) | 1.04 | 1.04 | 1.04 | 1.04 | 1.04 | 1.04 | 1.04 | 1.04 | 1.04 |
| Type of slurry (Batch No.) | 1 | 2 | | 4 | 5 | 6 | 6 | 6 | 6 |
| Slurry (parts bv mass) | 19.6 | 24.7 | 29.9 | 40.5 | 19.6 | 24.7 | 24.7 | 31.2 | 37.1 |
| Ratio of $TiO_2$ to total amount of $Al_2O3$ and $TiO_2$ contained in kneaded clay (mass%) | 9.7 | 9.8 | 17.8 | 26.1 | 9.8 | 9.8 | 9.8 | 12.4 | 14.7 |
| Water | Proper quantity | Proper quantity | Proper quantity | Proper quantity | Proper quantity | Proper quantity | Proper quantity | Proper quantity | Proper quantity |
| Firing temperature (°C) | 1250 | 1300 | 1250 | 1250 | 1250 | 1250 | 1300 | 1250 | 1250 |
| Firing time (hr) | | 2 | 2 | 2 | 2 | 2 | 2 | 2 | 2 |
| Porosity (%) | 34 | 32 | 30 | 25 | 33 | 39 | 39 | 37 | 35 |
| Average pore size (μm) | 7.0 | 7.0 | 7.2 | 6.8 | 6.1 | 9.7 | 9.8 | 9.1 | 8.3 |
| Flexural strength (MPa) | 19 | 28 | 40 | 55 | 22 | 16 | 19 | 20 | 29 |

| | Example 1 | Example 2 | Example 3 | Example 4 | Example 5 | Example 6 | Example 7 | Example 8 | Example 9 |
|---|---|---|---|---|---|---|---|---|---|
| Strength decrease rate (%) | 13.5 | 13.7 | 12.9 | 13.2 | 13.4 | 13.6 | 13.5 | 14.1 | 14.1 |
| Average coefficient of linear thermal expansion ($\times 10^{-6}$/K) | 8.1 | 7.9 | 8.0 | 8.1 | 8.0 | 7.8 | 7.9 | 7.8 | 7.9 |
| Average particle diameter of $Al_2O_3$ particles as aggregates ($\mu$m) | 6 | 8 | 11 | 11 | 7 | 18 | 23 | 15 | 14 |
| Content of $TiO_2$ in alumina porous body (mass%) | 9.75 | 9.75 | 17.76 | 25.99 | 9.75 | 9.75 | 9.75 | 12.31 | 17.76 |
| Total content of oxides of Cu, Mn, Ca, and Sr in alumina porous body (mass%) | 0.08 | 0.08 | 0.15 | 0.23 | 0.08 | 0.08 | 0.08 | 0.11 | 0.15 |

TABLE 4

| | Example 10 | Example 11 | Example 12 | Example 13 | Example 14 | Example 15 | Example 16 | Example 17 | Example 18 |
|---|---|---|---|---|---|---|---|---|---|
| $Al_2O_3$ (average particle diameter: 16 $\mu$m) (parts by mass) | - | - | - | - | - | - | - | 45.1 | 45.1 |
| $Al_2O_3$ (average particle diameter: 101 $\mu$m) (parts by mass) | - | - | - | - | - | - | - | 45.1 | - |
| $Al_2O_3$ (average particle diameter: 46 $\mu$m) (parts by mass) | 85.3 | - | - | - | - | - | - | - | - |
| $Al_2O_3$ (average particle diameter: 53 $\mu$m) (parts by mass) | - | 90.2 | 90.2 | 90.2 | 90.2 | 82.2 | 82.2 | - | 45.1 |
| $Al_2O_3$ (average particle diameter: 5 $\mu$m) (parts by mass) | - | - | - | - | - | - | - | - | - |
| $Al_2O_3$ (average particle diameter: 10 $\mu$m) (parts by mass) | - | - | - | - | - | - | - | - | - |
| Average particle diameter ($\mu$m) of $Al_2O_3$ measured by laser scattering | 51.5 | 44.9 | 44.9 | 44.9 | 44.9 | 44.9 | 44.9 | 67.5 | 44.9 |
| Organic binder (parts by mass) | 4.68 | 4.68 | 4.68 | 4.68 | 4.68 | 4.68 | 4.68 | 4.68 | 4.68 |
| Surfactant (parts by mass) | 1.04 | 1.04 | 1.04 | 1.04 | 1.04 | 1.04 | 1.04 | 1.04 | 1.04 |
| Type of slurry (Batch No.) | 6 | 7 | 7 | 8 | 8 | 7 | 7 | 7 | 7 |
| Slurry (parts by mass) | 37.1 | 16.4 | 16.4 | 16.5 | 16.5 | 29.9 | 29.9 | 16.4 | 16.4 |
| Ratio of $TiO_2$ to total amount of $Al_2O_3$ and $TiO_2$ contained in kneaded clay (mass%) | 14.7 | 9.8 | 9.8 | 9.8 | 9.8 | 17.8 | 17.8 | 9.8 | 9.8 |
| Water | Proper quantity | Proper quantity | Proper quantity | Proper quantity | Proper quantity | Proper quantity | Proper quantity | Proper quantity | Proper quantity |
| Firing temperature (°C) | 1300 | 1250 | 1300 | 1250 | 1300 | 1250 | 1300 | 1250 | 1250 |
| Firing time (hr) | 2 | 2 | 2 | 2 | 2 | 2 | 2 | 2 | 2 |
| Porosity (%) | 34 | 39 | 38 | 38 | 37 | 34 | 33 | 34 | 35 |
| Average pore size ($\mu$m) | 8.7 | 10.0 | 10.2 | 10.1 | 10.7 | 8.9 | 9.1 | 8.2 | 8.6 |
| Flexural strength (MPa) | 31 | 13 | 15 | 19 | 21 | 26 | 30 | 16 | 20 |

(continued)

| | Example 10 | Example 11 | Example 12 | Example 13 | Example 14 | Example 15 | Example 16 | Example 17 | Example 18 |
|---|---|---|---|---|---|---|---|---|---|
| Strength decrease rate (%) | 14.0 | 14.3 | 14.1 | 14.0 | 13.9 | 13.8 | 13.8 | 13.5 | 13.6 |
| Average coefficient of linear thermal expansion ($\times 10^{-6}$/K) | 7.9 | 7.8 | 8.0 | 7.9 | 7.9 | 8.0 | 8.1 | 8.0 | 7.9 |
| Average particle diameter of $Al_2O_3$ particles as aggregates ($\mu$m) | 18 | 23 | 25 | 20 | 19 | 22 | 28 | 25 | 23 |
| Content of $TiO_2$ in alumina porous body (mass%) | 17.76 | 9.75 | 9.75 | 9.74 | 9.74 | 17.76 | 17.76 | 9.75 | 9.75 |
| Total content of oxides of Cu, Mn, Ca, and Sr in alumina porous body (mass%) | 0.15 | 0.08 | 0.07 | 0.17 | 0.14 | 0.15 | 0.11 | 0.10 | 0.10 |

TABLE 5

| | Example 19 | Example 20 | Example 21 | Example 22 | Example 23 | Example 24* | Example 25* | Example 26* | Example 27* |
|---|---|---|---|---|---|---|---|---|---|
| $Al_2O_3$ (average particle diameter: 16 $\mu$m) (parts by mass) | 45.1 | 41.1 | 41.1 | 41.1 | 41.1 | 75.2 | 4.1 | 41.1 | 41.1 |
| $Al_2O_3$ (average particle diameter: 101 $\mu$m) (parts by mass) | - | - | - | - | - | 15.0 | - | - | - |
| $Al_2O_3$ (average particle diameter: 46 $\mu$m) (parts by mass) | - | - | - | - | - | - | - | - | - |
| $Al_2O_3$ (average particle diameter: 53 $\mu$m) (parts by mass) | 45.1 | 41.1 | 41.1 | 41.1 | 41.1 | - | 41.1 | 41.1 | 41.1 |
| $Al_2O_3$ (average particle diameter: 5 $\mu$m) (parts by mass) | - | - | - | - | - | - | - | - | - |
| $Al_2O_3$ (average particle diameter: 10 $\mu$m) (parts by mass) | - | - | - | - | - | - | - | - | - |
| Average particle diameter ($\mu$m) of $Al_2O_3$ measured by laser scattering | 44.9 | 44.9 | 44.9 | 44.9 | 44.9 | 22.8 | 44.9 | 44.9 | 44.9 |
| Organic binder (parts by mass) | 4.68 | 4.68 | 4.68 | 4.68 | 4.68 | 4.68 | 4.68 | 4.68 | 4.68 |
| Surfactant (parts by mass) | 1.04 | 1.04 | 1.04 | 1.04 | 1.04 | 1.04 | 1.04 | 1.04 | 1.04 |
| Type of slurry (Batch No.) | 7 | 7 | 7 | 9 | 10 | 11 | 12 | 13 | 14 |
| Slurry (parts by mass) | 16.4 | 29.9 | 29.9 | 29.9 | 29.9 | 16.4 | 34.6 | 36.9 | 29.9 |
| Ratio of $TiO_2$ to total amount of $Al_2O_3$ and $TiO_2$ contained in kneaded clay (mass%) | 9.8 | 17.8 | 17.8 | 17.8 | 17.8 | 9.8 | 17.8 | 17.8 | 17.8 |
| Water | Proper quantity | Proper quantity | Proper quantity | Proper quantity | Proper quantity | Proper quantity | Proper quantity | Proper quantity | Proper quantity |
| Firing temperature (°C) | 1300 | 1250 | 1300 | 1250 | 1250 | 1250 | 1250 | 1250 | 1250 |
| Firing time (hr) | 2 | 2 | 2 | 2 | 2 | 2 | 2 | 2 | 2 |
| Porosity (%) | 34 | 30 | 30 | 32 | 34 | 33 | 34 | 32 | 32 |
| Average pore size ($\mu$m) | 8.0 | 6.9 | 7.7 | 6.7 | 6.5 | 4.6 | 6.6 | 5.5 | 6.8 |
| Flexural strength (MPa) | 25 | 37 | 38 | 30 | 18 | 18 | 16 | 19 | 18 |

(continued)

| | Example 19 | Example 20 | Example 21 | Example 22 | Example 23 | Example 24* | Example 25* | Example 26* | Example 27* |
|---|---|---|---|---|---|---|---|---|---|
| Strength decrease rate (%) | 14.1 | 12.9 | 12.8 | 13.1 | 13.0 | 13.6 | 14.3 | 14.8 | 14.2 |
| Average coefficient of linear thermal expansion ($\times 10^{-6}$/K) | 8.0 | 8.1 | 8.0 | 7.9 | 7.9 | 8.1 | 7.9 | 7.9 | 8.0 |
| Average particle diameter of $Al_2O_3$ particles as aggregates ($\mu$m) | 10 | 11 | 13 | 15 | 13 | 5 | 15 | 17 | 15 |
| Content of $TiO_2$ in alumina porous body (mass%) | 9.75 | 17.75 | 17.75 | 17.77 | 17.78 | 9.75 | 17.72 | 17.52 | 17.66 |
| Total content of oxides of Cu, Mn, Ca, and Sr in alumina porous body (mass%) | 0.09 | 0.15 | 0.13 | 0.08 | 0.01 | 0.09 | 0.37 | 1.46 | 0.68 |

Wherein * denotes a reference example

TABLE 6

| | Example 28 | Example 29 | Example 30 | Example 31 | Example 32 | Example 33 | Example 34 | Comparative Example |
|---|---|---|---|---|---|---|---|---|
| $Al_2O_3$ (average particle diameter: 16 $\mu$m) (parts by mass) | - | - | - | - | - | - | - | 75.2 |
| $Al_2O_3$ (average particle diameter: 101 $\mu$m) (parts by mass) | 41.1 | 41.1 | 41.1 | 41.1 | 41.1 | 41.1 | 41.1 | 15.0 |
| $Al_2O_3$ (average particle diameter: 46 $\mu$m) (parts by mass) | - | - | - | - | - | - | - | - |
| $Al_2O_3$ (average particle diameter: 53 $\mu$m) (parts by mass) | 41.1 | 41.1 | - | - | - | - | - | - |
| $Al_2O_3$ (average particle diameter: 5 $\mu$m) (parts by mass) | - | - | - | - | 41.1 | 41.1 | 41.1 | - |
| $Al_2O_3$ (average particle diameter: 10 $\mu$m) (parts by mass) | - | - | 41.1 | 41.1 | - | - | - | - |
| Average particle diameter ($\mu$m) of $Al_2O_3$ measured by laser scattering | 67.5 | 67.5 | 29.9 | 29.9 | 13.2 | 13.2 | 13.2 | 22.8 |
| Organic binder (parts bv mass) | 4.68 | 4.68 | 4.68 | 4.68 | 4.68 | 4.68 | 4.68 | 4.68 |
| Surfactant (parts by mass) | 1.04 | 1.04 | 1.04 | 1.04 | 1.04 | 1.04 | 1.04 | 1.04 |
| Type of slurry (Batch No.) | 15 | 16 | 15 | 16 | 15 | 16 | 17 | 18 |
| Slurry (parts by mass) | 29.9 | 29.9 | 29.9 | 29.9 | 29.9 | 29.9 | 38.0 | 19.6 |
| Ratio of $TiO_2$ to total amount of $Al_2O_3$ and $TiO_2$ contained in kneaded clay (mass%) | 17.8 | 17.8 | 17.8 | 17.8 | 17.8 | 17.8 | 24.5 | 9.8 |
| Water | Proper quantity | Proper quantity | Proper quantity | Proper quantity | Proper quantity | Proper quantity | Proper quantity | Proper quantity |
| Firing temperature (°C) | 1250 | 1250 | 1250 | 1250 | 1250 | 1250 | 1250 | 1250 |
| Firing time (hr) | 2 | 2 | 2 | 2 | 2 | 2 | 2 | 2 |
| Porosity (%) | 34 | 33 | 26 | 27 | 22 | 24 | 20 | 34 |
| Average pore size ($\mu$m) | 10.5 | 9.8 | 3.9 | 3.9 | 4.3 | 2.1 | 4.5 | 7.7 |
| Flexural strength (MPa) | 18 | 21 | 52 | 56 | 88 | 76 | 102 | 5 |

(continued)

| | Example 28 | Example 29 | Example 30 | Example 31 | Example 32 | Example 33 | Example 34 | Comparative Example |
|---|---|---|---|---|---|---|---|---|
| Strength decrease rate (%) | 13.1 | 13.4 | 12.8 | 12.9 | 13.1 | 13.2 | 13.5 | 13.9 |
| Average coefficient of linear thermal expansion ($\times 10^{-6}$/K) | 7.9 | 7.9 | 8.1 | 8.0 | 8.2 | 8.1 | 8.1 | 7.9 |
| Average particle diameter of $Al_2O_3$ particles as aggregates ($\mu$m) | 26 | 24 | 10 | 14 | 7 | 6 | 5 | 5 |
| Content of $TiO_2$ in alumina porous body (mass%) | 17.75 | 17.75 | 17.75 | 17.76 | 17.75 | 17.71 | 24.44 | 9.76 |
| Total content of oxides of Cu, Mn, Ca, and Sr in alumina porous body (mass%) | 0.15 | 0.14 | 0.15 | 0.16 | 0.15 | 0.13 | 0.21 | 0 |

As shown in Tables 3 to 6, the alumina porous body of the Comparative Example that was produced without adding the sintering aid (copper oxide, manganese oxide, calcium carbonate, and strontium carbonate) exhibited an impractical flexural strength. On the other hand, the alumina porous bodies of Examples 1 to 34 (Examples 24 to 27 being reference examples) that were produced using at least one metal compound selected from copper oxide, manganese oxide, calcium carbonate, and strontium carbonate as the sintering aid exhibited a porosity, average pore size, flexural strength, and average coefficient of linear thermal expansion suitable for a substrate of a filter. The strength decrease rate was within the allowable range.

Examples 35 to 37

As shown in Table 7, titanium oxide ($TiO_2$) particles having an average particle diameter of 0.8 $\mu$m, copper oxide (CuO), a dispersant, and water were mixed using a pot mill to prepare a slurry (batch No. 19).

As shown in Table 8, alumina ($Al_2O_3$) particles having a given average particle diameter, the above slurry, an organic binder, a surfactant, and water were mixed to obtain a plastic kneaded clay. The kneaded clay was extruded into a monolith shape (outer diameter: 30 mm, length: 1000 mm, number of cells: 55, cell size: 2 mm) shown in FIG. 2, and dried to obtain a formed body. The formed body was calcined at 450°C, and fired at 1250°C for two hours to obtain monolithic alumina porous bodies of Examples 35 to 37.

The porosity, the average pore size, the flexural strength, the strength decrease rate, the average coefficient of linear thermal expansion, and the like of the resulting monolithic alumina porous body were measured in the same manner as in Examples 1 to 3 4 and the Comparative Example. The results are shown in Table 8.

TABLE 7

| Batch No. | 19 |
| --- | --- |
| $TiO_2$ (average particle diameter: 0.8 $\mu$m) (parts by mass) | 100 |
| CuO (parts bv mass) | 1 |
| Dispersant (parts by mass) | 0.5 |
| Water (parts by mass) | 66.8 |

TABLE 8

| | Example 35 | Example 36 | Example 37 |
| --- | --- | --- | --- |
| $Al_2O_3$ (average particle diameter: 16 $\mu$m) (parts by mass) | 75.2 | 41.1 | - |
| $Al_2O_3$ (average particle diameter: 101 $\mu$m) (parts by mass) | 15.0 | - | - |
| $Al_2O_3$ (average particle diameter: 53 $\mu$m) (parts by mass) | - | 41.1 | 82.2 |
| Average particle diameter ($\mu$m) of $Al_2O_3$ measured by laser scattering | 22.8 | 44.9 | 44.9 |
| Organic binder (parts by mass) | 4.68 | 4.68 | 4.68 |
| Surfactant (parts by mass) | 1.04 | 1.04 | 1.04 |
| Type of slurry (Batch No.) | 19 | 19a | 19 |
| Slurry (parts by mass) | 19.6 | 29.9 | 29.9 |
| Ratio of $TiO_2$ to total amount of $Al_2O_3$ and $TiO_2$ contained in kneaded clay (mass%) | 9.7 | 17.8 | 17.8 |
| Water | Proper quantity | Proper quantity | Proper quantity |
| Firing temperature (°C) | 1250 | 1250 | 1250 |
| Firing time (hr) | 2 | 2 | 2 |
| Porosity (%) | 33 | 32 | 36 |
| Average pore size ($\mu$m) | 6.4 | 7.1 | 8.4 |

(continued)

|  | Example 35 | Example 36 | Example 37 |
|---|---|---|---|
| Flexural strength (MPa) | 13 | 26 | 21 |
| Strength decrease rate (%) | 13.8 | 14.0 | 13.9 |
| Average coefficient of linear thermal expansion ($\times 10^{-6}$/K) | 7.9 | 7.9 | 8.0 |
| Average particle diameter of $Al_2O_3$ particles as aggregates particle diameter of $Al_2O_3$ particles as aggregates ($\mu$m) | 6 | 11 | 21 |
| Content of $TiO_2$ in alumina porous body (mass%) | 9.75 | 17.75 | 17.76 |
| Total content of oxides of Cu, Mn, Ca, and Sr in alumina porous body (mass%) | 0.08 | 0.15 | 0.14 |

As shown in Table 8, the monolithic alumina porous bodies of Examples 35 to 37 that were produced using copper oxide as the sintering aid exhibited a porosity, average pore size, flexural strength, and average coefficient of linear thermal expansion suitable for a substrate of a filter. The strength decrease rate was within the allowable range.

The present invention may suitably be used to produce a substrate (support) of a filter used for water treatment.

**Claims**

1. An alumina porous body having a porosity of 15 to 45% and an average pore size of 2 to 15 $\mu$m, the alumina porous body comprising 5 to 30 mass% of titanium oxide
   wherein the alumina porous body has a microstructure in which a bonding phase that contains titania particles as the main component binds alumina particles as an aggregate, the aggregate alumina particles having an average particle diameter of 2 to 80 $\mu$m,
   and wherein the average particle diameter is calculated by analysing an SEM photograph of the microstructure of the porous alumina body according to the method set out in [38] of the description,
   **characterized in that** the alumina porous body comprises copper oxide, the total content of oxides of coper being from 0.001 to 1.5% mass, and the bonding phase containing copper.

2. The alumina porous body according to claim 1, the alumina porous body having a flexural strength of 10 to 150 MPa as measured by a flexural strength test JIS R 1601.

3. The alumina porous body according to claim 1 or claim 2, the alumina porous body having a strength decrease rate of 20% or less, the strength decrease rate being calculated by the following expression (1) "strength decrease rate (%) = (initial strength - strength after operation) / initial strength $\times$ 100" (where, "strength after operation" is the flexural strength of the alumina porous body as measured by a flexural strength test JIS R 1601 after repeating (three times) an operation of immersing the alumina porous body in a sulfuric acid aqueous solution (temperature: 100°C, pH: 2) for three hours, removing the sulfuric acid aqueous solution by washing, drying the alumina porous body, immersing the alumina porous body in a sodium hydroxide aqueous solution (temperature: 100°C, pH: 12) for three hours, removing the sodium hydroxide aqueous solution by washing, and drying the alumina porous body, and "initial strength" is the flexural strength of the alumina porous body as measured by a flexural strength test JIS R 1601 before performing the operation).

4. The alumina porous body according to any one of claims 1 to 3, the alumina porous body having an average coefficient of linear thermal expansion of 7.5 to 8.5$\times 10^{-6}$/K as measured in accordance with JIS R 1618.

5. The alumina porous body according to any one of claims 1 to 4, the alumina porous body having a monolith shape.

6. A solid-liquid separation filter having a substrate which is an alumina porous body according to any one of claims 1 to 5.

7. A solid-liquid separation filter for water treatment, the filter having a substrate which is an alumina porous body according to any one of claims 1 to 5.

8. A method of producing an alumina porous body according to claim 1, the method comprising:

kneading a raw material mixture that contains alumina particles having an average particle diameter of 1 to 80 $\mu$m, titania particles having an average particle diameter of 0.5 to 10 $\mu$m, and copper oxide to obtain a kneaded clay,

forming the kneaded clay into a given shape, and

drying, calcining, and firing the resulting formed body at a firing temperature of 1200 to 1300°C to obtain an alumina porous body according to claim 1.

9. A ceramic filter comprising the alumina porous body according to any one of claims 1 to 5, and at least one porous ceramic membrane that has an average pore size smaller than that of the alumina porous body and is formed on the surface of the alumina porous body.


**Patentansprüche**

1. Poröser Aluminiumoxidkörper mit einer Porosität von 15 bis 45 % und einer durchschnittlichen Porengröße von 2 bis 15 $\mu$m, wobei der poröse Aluminiumoxidkörper 5 bis 30 Masse-% Titanoxid umfasst,
wobei der poröse Aluminiumoxidkörper eine Mikrostruktur aufweist, in der eine Bindungsphase, die als Hauptkomponente Titandioxidteilchen enthält, Aluminiumoxidteilchen als Aggregat bindet, wobei die aggregierten Aluminiumoxidteilchen einen durchschnittliche Teilchendurchmesser von 2 bis 80 $\mu$m aufweisen,
und wobei der durchschnittliche Teilchendurchmesser durch Analysieren einer SEM-Fotografie der Mikrostruktur des porösen Aluminiumoxidkörpers gemäß dem in [0038] der Beschreibung dargelegten Verfahren berechnet wird, **dadurch gekennzeichnet, dass** der poröse Aluminiumoxidkörper Kupferoxid umfasst, wobei der Gesamtgehalt an Oxiden von Kupfer 0,001 bis 1,5 Masse-% beträgt und die Bindungsphase das Kupferoxid enthält.

2. Poröser Aluminiumoxidkörper nach Anspruch 1, wobei der poröse Aluminiumoxidkörper, wie mit Hilfe eines Biegefestigkeitstests JIS R 1601 gemessen, eine Biegefestigkeit von 10 bis 150 MPa aufweist.

3. Poröser Aluminiumoxidkörper nach Anspruch 1 oder Anspruch 2, wobei der poröse Aluminiumoxidkörper eine Festigkeitsabnahmerate von 20 % oder weniger aufweist, wobei die Festigkeitsabnahmerate durch die folgende Gleichung (1) berechnet wird: "Biegefestigkeitsrate (%) = (Anfangsfestigkeit - Festigkeit nach dem Gebrauch) / Anfangsfestigkeit x 100" (wobei "Festigkeit nach Gebrauch" die in einem Biegefestigkeitstest JIS R 1601 gemessene Biegefestigkeit des porösen Aluminiumoxidkörpers nach dem (dreimaligen) Wiederholen eines Vorgangs ist, bei dem der poröse Aluminiumoxidkörper drei Stunden lang in einer wässrigen Schwefelsäurelösung (Temperatur: 100 °C, pH-Wert: 2) eingetaucht wird, die wässrige Schwefelsäurelösung durch Waschen entfernt wird, der poröse Aluminiumoxidkörper getrocknet wird, der poröse Aluminiumoxidkörper drei Stunden lang in eine wässrige Natriumhydroxidlösung (Temperatur: 100 °C, pH-Wert: 12) eingetaucht wird, die wässrige Natriumhydroxidlösung durch Waschen entfernt wird und der poröse Aluminiumoxidkörper getrocknet wird, und die "Anfangsfestigkeit" die durch einen Biegefestigkeitstest JIS R 1601 gemessene Biegefestigkeit vor der Durchführung des Vorgangs ist).

4. Poröser Aluminiumoxidkörper nach einem der Ansprüche 1 bis 3, wobei der poröse Aluminiumoxidkörper, wie gemäß JIS R 1618 gemessen, einen mittleren linearen Wärmeausdehnungskoeffizienten von 7,5 bis 8,5 x $10^{-6}$/K aufweist.

5. Poröser Aluminiumoxidkörper nach einem der Ansprüche 1 bis 4, wobei der poröse Aluminiumoxidkörper eine monolithische Form aufweist.

6. Feststoff-Flüssigkeits-Trennfilter mit einem Substrat, das ein poröser Aluminiumoxidkörper nach einem der Ansprüche 1 bis 5 ist.

7. Feststoff-Flüssigkeits-Trennfilter zur Wasserbehandlung, wobei der Filter ein Substrat aufweist, das ein poröser Aluminiumoxidkörper nach einem der Ansprüche 1 bis 5 ist.

8. Verfahren zur Herstellung eines porösen Aluminiumoxidkörpers nach Anspruch 1, wobei das Verfahren Folgendes umfasst:

das Kneten eines Rohmaterialgemisches, das Aluminiumoxidteilchen mit einem durchschnittlichen Teilchendurchmesser von 1 bis 80 $\mu$m, Titandioxidteilchen mit einem durchschnittlichen Teilchendurchmesser von 0,5 bis 10 $\mu$m und Kupferoxid enthält, um einen gekneteten Ton zu erhalten,

das Formen des gekneteten Tons in eine gegebene Form und

das Trocknen, Calcinieren und Brennen des resultierenden geformten Körpers bei einer Brenntemperatur von 1200 bis 1300 °C, um einen porösen Aluminiumoxidkörper nach Anspruch 1 zu erhalten.

**9.** Keramikfilter, der den porösen Aluminiumoxidkörper nach einem der Ansprüche 1 bis 5 und zumindest eine poröse Keramikmembran umfasst, die eine durchschnittliche Porengröße aufweist, die kleiner als die des porösen Aluminiumoxidkörpers ist, und die auf der Oberfläche des porösen Aluminiumoxidkörpers ausgebildet ist.

**Revendications**

1. Corps poreux d'alumine ayant une porosité de 15 à 45 % et une taille de pore moyenne de 2 à 15 $\mu$m, le corps poreux d'alumine comprenant de 5 à 30 % en masse d'oxyde de titane,

   dans lequel le corps poreux d'alumine a une microstructure dans laquelle une phase liante qui contient des particules de titane en tant que composant principal lie les particules d'alumine sous forme d'agrégat, les particules d'alumine agrégées ayant un diamètre de particule moyen de 2 à 80 $\mu$m,

   et dans lequel le diamètre de particule moyen est calculé en analysant une photographie MEB de la microstructure du corps poreux d'alumine selon la méthode décrite dans la section [0038] de la description,

   **caractérisé en ce que** le corps poreux d'alumine comprend de l'oxyde de cuivre, la teneur totale en oxydes de cuivre étant de 0,001 à 1,5 % en masse, et la phase liante contenant de l'oxyde de cuivre.

2. Corps poreux d'alumine selon la revendication 1, le corps poreux d'alumine ayant une résistance à la flexion de 10 à 150 MPa comme mesurée par le test de résistance à la flexion JIS R 1601.

3. Corps poreux d'alumine selon la revendication 1 ou la revendication 2, le corps poreux d'alumine ayant un taux de réduction de la résistance inférieur ou égal à 20 %, le taux de réduction de la résistance étant calculé par l'expression (1) suivante « taux de réduction de la résistance (%) = (résistance initiale - résistance après manipulation) / résistance initiale x 100 » (où la « résistance après utilisation » est la résistance à la flexion du corps poreux d'alumine comme mesurée par le test de résistance à la flexion JIS R 1601 après la répétition (trois fois) d'une manipulation d'immersion du corps poreux d'alumine dans une solution aqueuse d'acide sulfurique (température : 100 °C, pH : 2) pendant trois heures, de retrait de la solution aqueuse d'acide sulfurique par lavage, de séchage du corps poreux d'alumine, d'immersion du corps poreux d'alumine dans une solution aqueuse d'hydroxyde de sodium (température : 100 °C, pH : 2) pendant trois heures, de retrait de la solution aqueuse d'hydroxyde de sodium par lavage, et de séchage du corps poreux d'alumine, et la « résistance initiale » est la résistance à la flexion du corps poreux d'alumine comme mesurée par le test de résistance à la flexion JIS R 1601 avant manipulation.

4. Corps poreux d'alumine selon l'une quelconque des revendications 1 à 3, le corps poreux d'alumine ayant un coefficient moyen d'expansion thermique linéaire de 7,5 à 8,5x10$^{-6}$/K comme mesuré selon la norme JIS R 1618.

5. Corps poreux d'alumine selon l'une quelconque des revendications 1 à 4, le corps poreux d'alumine ayant une forme monolithique.

6. Filtre de séparation solide-liquide ayant un substrat qui est un corps poreux d'alumine selon l'une quelconque des revendications 1 à 5.

7. Filtre de séparation solide-liquide pour le traitement des eaux, le filtre ayant un substrat qui est un corps poreux d'alumine selon l'une quelconque des revendications 1 à 5.

8. Procédé de production d'un corps poreux d'alumine selon la revendication 1, le procédé comprenant :

   le malaxage d'un mélange de matières premières qui contient des particules d'alumine ayant un diamètre de particule moyen de 1 à 80 $\mu$m, des particules de titane ayant un diamètre de particule moyen de 0,5 à 10 $\mu$m, et de l'oxyde de cuivre pour obtenir une argile malaxée,

   la transformation de l'argile malaxée en une forme donnée, et

   le séchage, la calcination et la cuisson du corps formé résultant à une température de cuisson de 1200 à 1300 °C pour obtenir un corps poreux d'alumine selon la revendication 1.

9. Filtre en céramique comprenant le corps poreux d'alumine selon l'une quelconque des revendications 1 à 5 et au moins une membrane céramique poreuse qui a une taille de pore moyenne inférieure à celle du corps poreux d'alumine et est formée sur la surface du corps poreux d'alumine.

FIG.1

ALUMINA
AGGREGATE
PARTICLE

BINDER
PHASE

TITANIA

COPPER
OXIDE

20 μm

FIG.2

**EP 2 236 197 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 4136365 B
- JP 2670967 B
- US 7446067 B
- US 20040253432 A
- JP H01308868 B
- WO 2009108299 A
- US 5415775 A